**Europäisches Patentamt**

**European Patent Office**

**Office européen des brevets**

(19)

(11) Numéro de publication: **0 267 832
B1**

(12) **FASCICULE DE BREVET EUROPEEN**

(45) Date de publication du fascicule du brevet:
**13.06.90**

(51) Int. Cl.⁵: **G01N 3/12,** G01M 3/00

(21) Numéro de dépôt: **87402332.8**

(22) Date de dépôt: **19.10.87**

(54) **Dispositif destiné à tester à chaud la résistance mécanique de récipients pressurisés.**

(30) Priorité: **31.10.86 FR 8615173**

(43) Date de publication de la demande:
**18.05.88 Bulletin 88/20**

(45) Mention de la délivrance du brevet:
**13.06.90 Bulletin 90/24**

(84) Etats contractants désignés:
**AT BE CH DE ES FR GB IT LI NL SE**

(56) Documents cités:
**FR-A- 2 042 424
FR-A- 2 136 539**

(73) Titulaire: **L'OREAL, 14, Rue Royale, F-75008 Paris(FR)**

(72) Inventeur: **Constantin, Daniel, 5, rue Moufle,
F-75011 Paris(FR)**

(74) Mandataire: **Michardière, Bernard et al, C/O CABINET
PEUSCET 68, rue d'Hauteville, F-75010 Paris(FR)**

ACTORUM AG

## Description

La présente invention se rapporte à un dispositif pour tester en continu, à chaud, la résistance mécanique de récipients pressurisés, notamment du type "bombe aérosol".

Les récipients de ce type sont utilisés, par exemple, pour le conditionnement et la distribution de produits cosmétiques ou d'entretien ; de tels récipients sont dotés d'une valve de distribution permettant à l'utilisateur, en agissant sur un bouton-poussoir solidaire de la valve, de provoquer l' éjection du produit à distribuer.

Une fois effectué le conditionnement des produits dans lesdits récipients, il convient de tester ces derniers pour savoir s'ils ont une résistance mécanique suffisante pour tenir à la pression de conditionnement dans tous les cas de stockage habituels. A cet effet, on dispose les récipients sur un transporteur et on les fait passer dans un bain d'eau chaude et on les y laissant suffisamment longtemps pour qu'ils soient portés, à coeur, à une température se situant aux environs de 50-55°C. Un tel dispositif est décrit dans FR-A 2 136 539.

Cette technique, qui est actuellement utilisée, présente l'inconvénient de nécessiter une consommation d'énergie relativement importante pour maintenir le bain d'eau à la température désirée. De plus, si la surface extérieure de la paroi des récipients n'est par complètement lisse et a, en conséquence, tendance à retenir l'eau (cas de la coupelle de valve qui retient toujours de l'eau ou cas des récipients dont la paroi externe est en verre dépoli, éventuellement recouvert d'une peinture mate), il est nécessaire de prévoir une opération supplémentaire de séchage des récipients au sortir du bain, car le temps normal de séchage à l'air libre serait beaucoup trop long et compromettrait la bonne marche des chaînes de conditionnement. Selon une autre technique décrite dans FR-A 2 042 424, le chauffage des récipients est réalisé à l'aide d'une unique source de rayonnement haute fréquence.

La présente invention permet de remédier aux inconvénients de l'art antérieur et propose, dans ce but, d'exposer les récipients pressurisés à un rayonnement chauffant, par exemple infra-rouge, pour échauffer très rapidement la phase gazeuse consituant l'agent propulseur afin d'amener les récipients à une pression interne équivalente à celle atteinte lorsque ceux-ci sont portés à une température de 50-55°C à coeur. Afin d'éviter tous risques d'incendie dus à une projection du contenu d'un récipient sur une lampe consécutivement à la casse de ce récipient, les lampes sont enfermées chacune dans un boîtier étanche, ventilé et pressurisé, le rayonnement infra-rouge passant à travers une fenêtre appropriée. Les récipients à tester sont disposés sur un transporteur, le long duquel sont placés les boîtiers des lampes infra-rouges, avantageusement réglables en position, le nombre de lampes et leur disposition sur la ligne de conditionnement (soit en vis-à-vis, soit décalées les unes par rapport aux autres) étant fonction du débit instantané de la ligne de conditionnement, des dimensions en largeur des récipients et du temps nécessaire pour obtenir, à l'intérieur de ceux-ci, une pression équivalente à celle atteinte lorsqu'ils sont portés à la température de test précité .

Les lampes sont disposées dans un tunnel constitué, par exemple, de carters amovibles montés sur un châssis, ces carters étant isolés thermiquement, une fenêtre d'entrée et une fenêtre de sortie étant ménagées pour les récipients. Le tunnel est traversé par le transporteur, qui déplace les récipients.

Le double problème, qui se posait, est résolu par l'invention, puisque le choix d'un rayonnement infra-rouge pour chauffer les récipients à tester permet de mieux maîtriser les dépenses d'énergie ; on peut notamment prévoir un arrêt du transporteur et une mise hors service des lampes si, après un temps donné, aucun récipient ne sort du tunnel par suite d'un bourrage à l'intérieur de ce dernier ou si aucun récipient ne se présente à l'entrée du tunnel. Le séchage des récipients, après le t est, n'a plus aucune raison d'être puisque les récipients ne sont plus mouillés.

L'invention offre également l'avantage complémentaire que l'on peut utiliser un transporteur ne comportant pas de moyen de maintien mécanique des récipients, ce qui était nécessaire lorsque l'on utilisait un bain d'eau chaude. Dans le cas de la présente invention, si les récipients sont instables sur leur base, on peut tout simplement les placer dans un godet, porté par le transporteur.

Par ailleurs, le test de résistance peut être réalisé dans des conditions plus simples et plus fiables qu'avec la technique antérieure. En effet, avec le dispositif de l'invention, on peut mettre en place les boutons-poussoirs, et éventuellement les capots, sur les récipients avant le test, ce qui était impossible à réaliser dans le cas de l'état antérieur de la technique, puisqu'il serait resté de l'eau dans la zone du capot ou du bouton-poussoir. Il fallait, par conséquent, dans le cas d'utilisation d'un bain d'eau, mettre en place le bouton-poussoir ou capot après le test, opération qui était gênée par le fait que le joint de queue de valve est dilaté tant que le récipient est encore chaud.

La présente invention offre également des avantages sur le plan de la sécurité, car, les récipients étant transportés dans un tunnel, il n'y a pas, en cas d'éclatement de l'un d'eux , de projection de son contenu sur le personnel. Par ailleurs, on prévoit, selon la présente invention, un système permettant de détecter les anomalies, qui peuvent se produire dans le tunnel, de façon que, si un récipient, qui y est rentré, ne se retrouve pas au moment voulu à la sortie, on puisse faire immédiatement cesser le fonctionnement des lampes infra-rouges et du transporteur.

La présente invention a pour objet un dispositif destiné à tester en continu à chaud la résistance mécanique de chaque récipient pressurisé d'une série de récipients pressurisés, ce dispositif comportant un transporteur permettant de déplacer les récipients à tester en translation par rapport à une enceinte fixe qui comporte intérieurement un moyen de chauffage, les récipients traversant ladite enceinte de façon que leur température interne soit élevée par ledit moyen de chauffage jusqu'à une valeur prédéterminée, caractérisé par le fait que l'enceinte traversée par les récipients à tester forme un tunnel, le moyen de chauffage disposé à l'intérieur de ladite enceinte étant constitué par une pluralité de lampes infra-rouges, dont chacune est protégée par un boîtier ayant une face transparente aux radiations émises, un dispositif de surveillance automatique contrôlant que chaque récipient, qui entre dans le tunnel, en ressort après un avancement donné du transporteur, faute de quoi une sécurité est déclenchée.

Conformément à un mode de réalisation du dispositif selon la présente invention, la sortie du tunnel est équipée d'un déflecteur de protection, oblique par rapport à l'axe de ladite sortie, le transporteur suivant, après la sortie du tunnel, le tracé dudit déflecteur, l'orientation de ce dernier étant liée à l'implantation du tunnel sur la chaîne de production.

En outre, le boîtier associé à chaque lampe infra-rouge est un boîtier métallique refroidi, la face transparente aux radiations infra-rouges comportant, d'une part, vers l'intérieur du boîtier, une lame de quartz et, d'autre part, vers l'extérieur du boîtier, une lame de verre résistant aux chocs thermiques, l'espace inter-lame étant, de préférence, balayé par un fluide de refroidissement avantageusement constitué par un flux d'air comprimé. De plus, chaque boîtier de lampe infra-rouge est, de préférence, muni extérieurement d'ailettes de refroidissement.

Conformément à un autre mode de réalisation de la présente invention, la ligne moyenne du transporteur a une forme en U, l'entrée des récipients dans l'enceinte se faisant par l'une des branches du U et la sortie par l'autr e branche, les lampes infra-rouges étant disposées de part et d'autre du transporteur, tout au long du trajet de celui-ci dans l'enceinte. La ligne moyenne du transporteur peut aussi être sensiblement rectiligne.

En ce qui concerne le dispositif de surveillance, ce dernier comporte avantageusement un moyen de repérage par pas de l'avancement du transporteur et, à l'entrée et à la sortie de l'enceinte, un moyen de détection pour déterminer la présence ou l'absence d'un récipient pressurisé sur une zone ayant la longueur d'un pas de repérage de l'avancement du transporteur. Ces moyens de repérage et de détection sont notamment des émetteurs-récepteurs optiques. En particulier, chaque émetteur-récepteur optique comporte une photo-diode associée à un faisceau de fibres optiques, dont l'extrémité est fixe par rapport à l'organe à détecter, que le transporteur déplace, et située en vis-à-vis de l'extrémité d'un autre faisceau de fibres optiques relié à un photo-transistor récepteur.

Conformément à un mode de réalisation préféré du dispositif de surveillance, le moyen de repérage qu'il comporte fournit une impulsion à chaque passage en un point fixe d'une encoche d'une roue à encoches solidaire du tambour d'entraînement du transporteur, le passage d'une encoche à l'autre correspondant à un pas de repérage de l'avancement du transporteur. Ainsi, le moyen de détection d'entrée et de sortie peut être adapté pour fournir, à chaque repérage de récipients, un créneau de tension dont la durée est inférieure au temps séparant deux impulsions successives du moyen de repérage. Avantageusement, les créneaux de la détection d'entrée sont envoyés sur un registre à décalage, où ils se déplacent d'un cran à chaque impulsion du moyen de repérage, le niveau en un point du registre, qui correspond, à partir de l'entrée du registre, au nombre de pas d'avancement séparant les détections d'entrée et de sortie, étant comparé au niveau de la détection de sortie.

Pour mieux faire comprendre l'objet de la présente invention, on va en décrire ci-après, à titre d'exemple purement illustratif et non limitatif, un mode de réalisation représenté sur le dessin annexé.

Sur ce dessin :

- la figure 1 est une vue schématique de dessus du dispositif selon la présente invention, les couvercles amovibles qui sont portés par le châssis et qui forment avec lui l'enceinte-tunnel dans laquelle évolue le transporteur, n'ayant par été représentés pour laisser voir l'organisation intérieure du dispositif de l'invention ; un schéma du dispositif de surveillance automatique des récipients est également représenté sur la figure 1 ;
- la figure 2 est, à plus grande échelle, une vue en coupe verticale selon II-II de la figure 1 ;
- la figure 3 est une vue, à plus grande échelle encore, de la partie de la figure 2, qui représente la face du boîtier d'une lampe infra-rouge, qui est transparente aux radiations infra-rouges ;
- la figure 4 est un diagramme représentant les signaux électriques émis par le dispositif de surveillance.

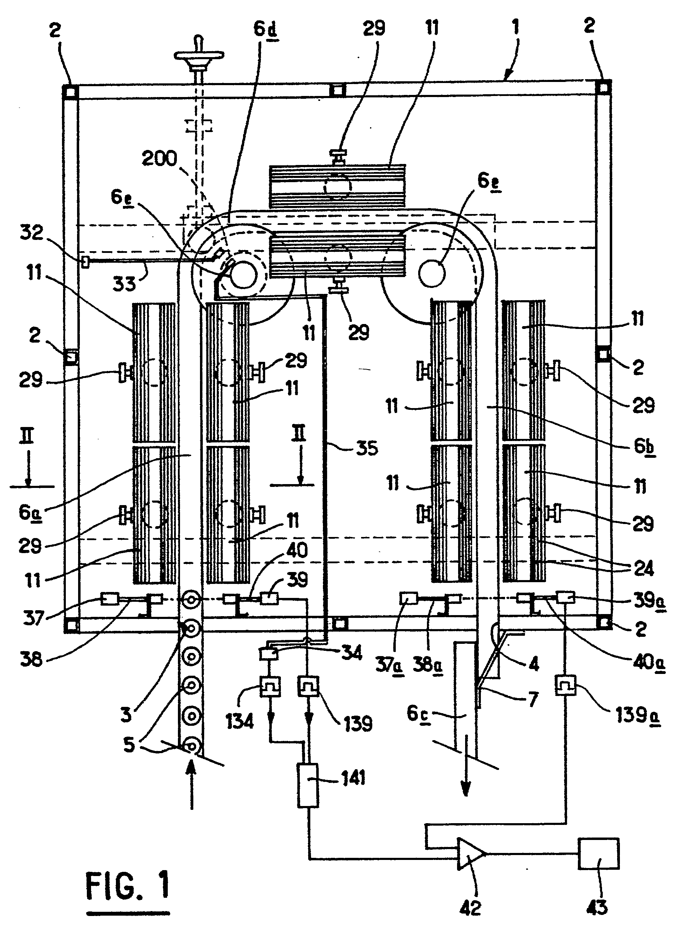

Si l'on se réfère maintenant à la figure 1, on voit que l'on a désigné par 1, dans son ensemble, une enceinte fixe, constituée par un châssis 2, composé de tubes métalliques et de carters amovibles, les couvercles n'étant pas représentés sur le dessin ; ces carters sont isolés thermiquement et sont rapportés sur le châssis 2, de façon à former un tunnel comportant une fenêtre d'entrée 3 et une fenêtre de sortie 4 pour le passage des récipients 5 destinés à être testés par le dispositif. La ligne moyenne du tunnel a la forme d'un U.

Comme on peut le voir sur la figure 1, les récipients 5 sont placés les uns derrière les autres sur un transporteur 6, dont la ligne moyenne est aussi en forme de U et se trouve confondue avec la ligne moyenne du tunnel.

L'entrée des récipients 5 dans l'enceinte se fait par l'une des branches 6 a du U formé par le transp    orteur, à travers la fenêtre d'entrée 3, et la sortie se fait par l'autre branche 6 b , à travers la fenêtre de sortie 4.

Par ailleurs, la sortie du tunnel est équipée d'un déflecteur de protection 7, qui est disposé de façon oblique par rapport à l'axe de cette sortie, de façon que les récipients 5, qui sortent du tunnel, soient déviés par ledit déflecteur 7 et repris par une branche 6 c du transporteur 6, extérieure au tunnel, parallèle à la branche 6 b , et adjacente à cette dernière, les deux branches 6 b et 6 c étant adjacentes dans la région dudit déflecteur 7.

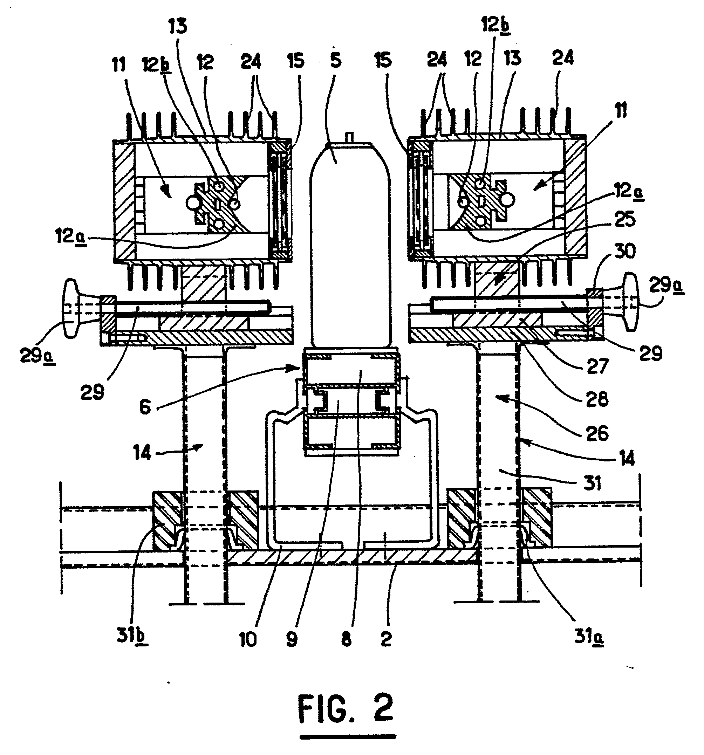

Comme on peut le voir sur la figure 2, le transporteur 6 est constitué par des palettes 8 sur lesquelles reposent les récipients 5, ces palettes 8 étant entraînées par une chaîne mobile 9 montée sur un support fixe 10. Des roues 6 e assurent le cintrage de la chaîne d'eintraînement 9 aux deux angles du U ; l'une de ces deux roues 6 e constitue le tambour d'entraînement de la chaine 6 et est associée à une roue à encoches 200. Le transporteur 6 peut être réalisé en matière plastique car il n'est pas chauffé par les lampes infra-rouges 11 décrites plus loin, les radiations étant très directionnelles.

Dans l'enceinte 1, sur le trajet du transporteur 6, et de part et d'autre de celui-ci, sont disposées des lampes infra-rouges 11, qui sont au nombre de dix et qui sont réparties de la façon suivante : quatre associées à la branche 6 a, quatre associées à la branche 6 b et deux associées à la branche 6 d constituant l'âme du U, les lampes 11 étant agencées par paires, deux lampes 11 d'une même paire se faisant vis-à-vis.

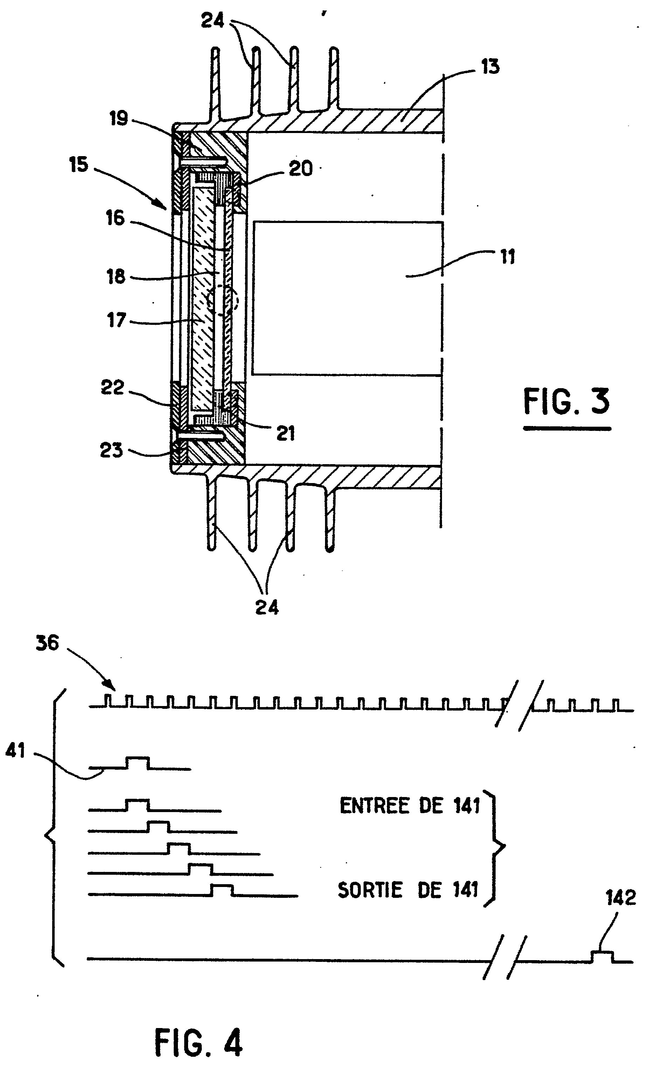

La figure 2 illustre le montage de chacune des lampes 11 et montre les possibilités de réglage, d'une part, de sa hauteur, et, d'autre part, de son écartement par rapport aux récipients 5. Chaque lampe 11 (puissance de 2000 watts par exemple) est constituée par un émetteur infra-rouge 12 associé à un réflecteur 12 a refroidi par une circulation d'eau 12 b ; chaque lampe 11 est logée dans un boîtier 13 solidaire d'un socle 14. Le boîtier 13 d'une lampe 11 présente une forme parallélépipédique, dont l'axe longitudinal est disposé parallèlement à la branche du transporteur 6, à laquelle est associée ladite lampe 11. Comme on peut le voir notamment sur la figure 3, la face 15 du boîtier 13, qui est tournée vers le transporteur 6 et devant laquelle défileront les récipients 5, comporte deux lames 16, 17 parallèles à l'axe longitudinal dudit boîtier 13, espacées l'une de l'autre de façon à constituer un espace intermédiaire 18, des moyens étant prévus pour que cet espace soit balayé par un flux d'air comprimé (par exemple, à une pression relative de 40.000 Pa). La lame intérieure 16 est une lame de quartz, transparente aux radiations infra-rouges, mais peu résistante aux chocs thermiques. La lame extérieure 17 est en verre du type connu sous la marque "Pyrex", très rèsistante aux chocs thermiques et mécaniques. Les lames 17 évitent l'endommagement des lampes 11, au cas où l'un des récipients 5 transportés dans le tunnel ne résisterait pas à la pression et exploserait dans le tunnel.

Les lames 16 et 17 sont montées dans un bouchon 19 obturant le corps du boîtier 13, sur la face 15 de celui-ci. La lame interne 16 est appliquée contre une bague-joint 20 introduite dans l'ouverture du corps du boîtier 13, ladite bague 20 étant en appui contre le bouchon 19 et recevant intérieurement un élément-entretoise 21 qui assure le maintien d'un écartement entre les lames 16 et 17 ; la lame extérieure 17 est maintenue par un cadre extérieur 22 avec interposition d'une plaque 23, l'ensemble 22-23 étant vissé sur la face frontale du bouchon 19.

Par ailleurs, le corps du boîtier 13 comporte extérieurement des ailettes de refroidissement 24, disposées dans des plans parallèles à l'axe longitudinal dudit boîtier 13.

Le socle 14 est réalisé en deux parties, l'une 25 étant reliée au boîtier 13, et l'autre 26 étant solidaire du châssis 2, les éléments d'extrémité en regard, respectivement 27 et 28, des parties 25 et 26 se présentant sous la forme de plaques pouvant coulisser l'une sur l'autre, ces plaques étant disposées dans des plans parallèles à l'axe longitudinal du boîtier 13 et au plan de déplacement de la chaîne 9.

La partie 25 est traversée par une tige filetée 29 qui est perpendiculaire à l'axe longitudinal du boîtier 13 et qui porte, du côté opposé à la face 15 dudit boîtier 13, un papillon 29 a permettant le réglage de l'écartement du boîtier 13 par rapport à la ligne moyenne du transporteur 6 ; la tige 29 est portée par un rebord 30 solidaire de la plaque 28 de la partie 26 du socle 14.

La plaque 28 est solidaire d'un pied 31 déplaçable en hauteur par rapport au châssis 2. Le pied 31 peut coulisser dans une ouverture du châssis ; il est bloqué à la hauteur désirée par un joint 31 a, disposé dans un siège 31 b, ce blocage étant assuré sur un cadre non représenté sur la figure 2.

L'ensemble, qui vient d'être décrit, comporte un moyen de surveillance automatique, qui est destiné à contrôler que chaque récipient 5, qui entre dans le tunnel, en ressort après un avancement donné du transporteur 6, faute de quoi une sécurité est déclenchée. Ce moyen de surveillance comporte, d'une part, un moyen de repérage par pas de l'avancement du transporteur 6, et, d'autre part, un moyen de détection destiné à déterminer la présence ou l'absence d'un récipient pressurisé 5 sur une zone ayant la longueur d'un pas de repérage de l'avancement du transporteur 6.

Le moyen de repérage précité est constitué par un émetteur-récepteur optique, disposé à l'extérieur du tunnel, au voisinage du tambour d'entrainement du transporteur ; cet émetteur-récepteur comporte, d'un côté de la roue à encoches 200 solidaire dudit tambour d'entrainement du transporteur 6, une photo-diode 32 associée à un faisceau de fibres optiques 33, et, de l'autre côté de ladite roue à encoches, un photo-transistor récepteur 34, également associé à un faisceau de fibres optiques 35, les extrémités des fibres optiques 33, 35 étant situées en vis-à-vis, de sorte qu'à chaque fois qu'une encoche de la roue passe devant elles, ce qui correspond à un pas d'avancement du transporteur 6, le faisceau lumineux ne soit plus occulté ; dans ce cas, le photo-transistor 34 émet un signal, que l'on transforme par un composant de mise en forme 134 ; l'impulsion obtenue est repérée par le chiffre de référence 36 sur le diagramme de la figure 4.

Le moyen de détection à l'entrée du tunnel, est constitué, par un émetteur-récepteur optique disposé à l'intérieur dudit tunnel, juste derrière la fenêtre 3. Il est constitué, d'une part, par une photo-diode 37 associée à un faisceau de fibres optiques 38, et, d'autre part, par un photo-transistor récepteur 39 également associé à un faisceau de fibres optiques 40, les extrémités des fibres optiques 38 et 40 étant disposées en vis-à-vis l'une de l'autre, de part et d'autre du transporteur 6, de sorte qu'à chaque fois que la valve d'un récipient 5 passe devant elles, le faisceau est occulté et le photo-transistor 39 émet un signal transformé en un créneau de tension par un composant de mise en forme 139 ; ce créneau est désigné par 41 sur le diagramme de la figure 4. La largeur des créneaux 41 est inférieure à la distance séparant deux impulsions 36.

Le moyen de détection à la sortie du tunnel, disposé derrière la fenêtre de sortie 4, présente une structure strictement identique à celle du moyen de détection à l'entrée ; les organes, qui le composent, sont donc identiques à ceux du moyen de détection à l'entrée et sont repérés par les mêmes chiffres de référence suivis de la lettre " a".

Les créneaux de la détection d'entrée sont envoyés sur un registre à décalage 141, dont le rôle est de retarder de n impulsions, le marquage significatif de chaque créneau, n étant le nombre de pas que doit faire le transporteur 6 pour acheminer un récipient 5 depuis l'entrée jusqu'à la sortie du tunnel. Ainsi, un créneau envoyé sur le registre à décalage 141 se déplace d'un cran à chaque impulsion 36 provenant du photo-transistor 34, de sorte que lorsqu'il a subi n déplacements dans le registre à décalage 141, il se retrouve à la sortie de ce dernier ; on compare ladite sortie avec la sortie correspondante du photo-transistor 39 a, dans un comparateur 42. Le déplacement des créneaux dans le registre à décalage 141 est schématisé sur le diagramme de la figure 4.

Les deux entrées du comparateur 42 sont alimentées de la même façon, la sortie du comparateur est à zéro; ceci correspond au cas où le récipient 5 correspondant a suivi correctement son trajet sur le transporteur 6 dans le tunnel (présence d'un créneau sur chaque entrée) ou au cas où aucun récipient 5 ne se trouvait sur la zone correspondante du transporteur 6 (absence de créneau sur chaque entrée). En revanche, si les deux entrées du comparateur 42, ne sont pas identiques, la sortie du comparateur 42 fournit un créneau de tension 142 comme représenté sur la dernière ligne de la figure 4. Le créneau 142 déclenche une sécurité 43, laquelle provoque l'extinction des lampes 11 et l'arrêt du transporteur 6.

Il existe toutefois un cas dans lequel ce système de surveillance pourrait être mis en défaut : c'est le cas d'un bourrage remontant de l'aval. En effet, si un récipient 5 s'arrête devant le faisceau de fibres optiques 38 a en oscillant devant celui-ci et que l'un des bords de la valve coupe le faisceau par intermittence, il peut y avoir à partir du photo-transistor 39 a, la même émission de signaux que dans le cas où les récipients 5 défilent normalement. C'est pourquoi on associe à l'émetteur-récepteur optique de détection à la sortie de l'enceinte 1, deux autres émetteurs-récepteurs temporisés (non représentés) dont l'occultation trop prolongée de l'un ou de l'autre provoque la commande de la sécurité 43. Le repérage d'un bourrage peut également s'effectuer dans le cas où une cellule est occultée pendant plus d'un temps déterminé.

Avant démarrage, on contrôle que toutes les cellules fonctionnent par une vérification en séquence automatique.

Le dispositif selon l'invention peut également être équipé, dans les trois axes du transporteur 6, d'un détecteur de flamme sensible aux rayonnements UV. Si, un récipient 5 défectueux explose dans le tunnel et si la température entraîne l'auto-inflammation des vapeurs ainsi libérées, le détecteur de flamme commande l'ouverture d'un récipient rempli de gaz incombustible sous pression ; ce gaz occupe tout l'espace intérieur du tunnel en une fraction de seconde ; on stoppe ainsi tout risque d'incendie.

Il est bien entendu que le mode de réalisation ci-dessus décrit n'est aucunement limitatif et pourra donner lieu à toutes modifications désirables.

## Revendications

1 - Dispositif destiné à tester en continu à chaud la résistance mécanique de chaque récipient pressurisé d'une série de récipients pressurisés, ce dispositif comportant un transporteur (6) permettant de déplacer les récipients à tester (5) en translation par rapport à une enceinte fixe (1) qui comporte intérieurement un moyen de chauffage, les récipients (5) traversant ladite enceinte (1) de façon que leur température interne soit élevée par ledit moyen de chauffage jusqu'à une valeur prédéterminée, caractérisé par le fait que l'enceinte (1) traverseé par les récipients à tester (5) forme un tunnel, le moyen de chauffage disposé à l'intérieur de ladite enceinte (1) étant constitué par une pluralité de lampes infra-rouges (11), dont chacune est protégée par un boîtier (13) ayant une face transparente aux radiations émises, un dispositif de surveillance automatique contrôlant que chaque récipient (5), qui entre dans le tunnel, en ressort après un avancement donné du transporteur (6), faute de quoi une sécurité (43) est déclenchée.

2 - Dispositif selon la revendication 1, caractérisé par le fait que la sortie du tunnel est équipée d'un déflecteur de protection (7), oblique par rapport à l'axe de ladite sortie, le transporteur (6) suivant, après la sortie du tunnel, le tracé dudit déflecteur (7).

3 - Dispositif selon l'une des revendications 1 ou 2, caractérisé par le fait que le boîtier (13) associé à chaque lampe infra-rouge (11) est un boîtier métallique refroidi, la face (15) transparente aux radiations infra-rouges comportant, d'une part, vers l'intérieur du boîtier (13), une lame de quartz (16) et, d'autre part, vers l'extérieur du boîtier (13), une lame de verre (17) résistant aux chocs thermiques, l'espace inter-lame (18) étant balayé par un fluide de refroidissement.

4 - Dispositif selon la revendication 3, caractérisé par le fait que chaque boîtier (13) de lampe infra-rouge est muni extérieurement d'ailettes de refroidissement (24).

5 - Dispositif selon l'une des revendications 3 ou 4, caractérisé par le fait que l'espace inter-lame (18) est balayé par un flux d'air comprimé.

6 - Dispositif selon l'une des revendications 1 à 5, caractérisé par le fait que la ligne moyenne du transporteur (6) a une forme en U, l'entrée des récipients (5) dans l'enceinte (1) se faisant par l'une des branches (6 a) du U et la sortie par l'autre branche (6 b), les lampes infra-rouges (11) étant disposées de part et d'autre du transporteur (6), tout au long du trajet de celui-ci dans l'enceinte (1).

7 - Dispositif selon l'une des revendications 1 à 5, caractérisé par le fait que la ligne moyenne du transporteur est sensiblement rectiligne.

8 - Dispositif selon l'une des revendications 1 à 7, caractérisé par le fait que le dispositif de surveillance comporte un moyen de repérage par pas de l'avancement du transporteur (6) entraîné par un tambour (6e) et, à l'entrée et à la sortie de l'enceinte (1), un moyen de détection pour déterminer la présence ou l'absence d'un récipient pressurisé (5) sur une zone ayant la longueur d'un pas de repérage de l'avancement du transporteur (6).

9 - Dispositif selon la revendication 8, caractérisé par le fait que les moyens de repérage et de détection sont des émetteurs-récepteurs optiques.

10 - Dispositif selon la revendication 9, caractérisé par le fait que chaque émetteur-récepteur optique comporte une photo-diode (32 ; 37 ; 37 a) associée à un faisceau de fibres optiques (33 ; 38 ; 38 a), dont l'extrémité est fixe par rapport à l'organe à détecter, que le transporteur (6) déplace, et est située en vis-à-vis de l'extrémité d'un autre faisceau de fibres optiques (35 ; 40 ; 40 a) relié à un photo-transistor récepteur (34 ; 39 ; 39 a).

11 - Dispositif selon l'une des revendications 8 à 10, caractérisé par le fait que le moyen de repérage fournit une impulsion à chaque passage en un point fixe d'une encoche d'une roue à encoches solidaire du tambour (6e) d'entraînement du transporteur (6), le passage d'une encoche à la suivante correspondant à un pas de repérage de l'avancement du transporteur.

12 - Dispositif selon la revendication 11, caractérisé par le fait que le moyen de détection d'entrée et de sortie fournit, à chaque repérage de récipient (5), un créneau de tension, dont la durée est inférieure au temps séparant deux impulsions successives du moyen de repérage.

13 - Dispositif selon la revendication 12, caractérisé par le fait que les créneaux de la détection d'entrée sont envoyés sur un registre à décalage (141), où ils se déplacent d'un cran à chaque impulsion du moyen de repérage, le niveau en un point du registre, qui correspond, à partir de l'entrée du registre (141), au nombre de pas d'avancement séparant les détections d'entrée et de sortie, étant comparé au niveau de la détection de sortie.

## Patentansprüche

1. Vorrichtung zur kontinuierlichen Prüfung in der Wärme der mechanischen Festigkeit jedes einzelnen einer Serie von unter Druck stehenden Behältern, wobei diese eine Transportvorrichtung (6) aufweist, welche es gestattet, die im Durchlauf zu prüfenden Behälter (5) gegenüber einem festen Gehäuse (1) zu verschieben, welches innen eine Heizvorrichtung aufweist, wobei die Behälter (5) das Gehäuse (1) so durchlaufen, daß ihre Innentemperatur durch die Heizvorrichtung auf einen vorbestimmten Wert erhöht wird, dadurch gekennzeichnet, daß das von dem zu testenden Behälter (5) durchlaufene Gehäuse (1) einen Tunnel bildet, die im Innenraum des Gehäuses (1) befindliche Heizvorrichtung aus mehreren Infrarotlampen (11) besteht, wovon jede einzelne durch ein Gehäuse (13) geschützt ist, das eine für die emittierte Strahlung durchlässige Seite (15) aufweist, wobei eine automatische Vorrichtung kontrolliert, daß der Behälter (5), der in den Tunnel eintritt, ihn nach Beförderung durch die Transportvorrichtung (6) auch wieder verläßt, andernfalls eine Sicherung (43) ausgelöst wird.

2. Vorrichtung nach Anspruch 1, dadurch gekennzeichnet, daß der Tunnelausgang mit einem Schutzdeflektor (7) ausgestattet ist, welcher schräg zur Achse des Ausgangs angeordnet ist, wobei die Transportvorrichtung (6) dem Verlauf des Deflektors (7) nach dem Tunnelausgang folgt.

3. Vorrichtung nach einem der Ansprüche 1 oder 2, dadurch gekennzeichnet, daß jedes, mit einer Infrarotlampe (11) ausgestattete Gehäuse (13) ein gekühltes Metallgehäuse ist, wobei die für Infrarotstrahlung durchlässige Seite (15) auf ihrer dem Gehäuse (13) zugewandten Seite aus einer Quartzscheibe (16) und auf ihrer vom Gehäuse (13) abgewandten Seite aus einer thermoschockbeständigen Glasscheibe (17) besteht und der Zwischenraum (18) zwischen beiden Seiten von einem Kühlfluid durchströmt wird.

4. Vorrichtung nach Anspruch 3, dadurch gekennzeichnet, daß jedes Gehäuse (13) einer Infrarotlampe außen Kühlrippen (24) aufweist.

5. Vorrichtung nach einem der Ansprüche 3 oder 4, dadurch gekennzeichnet, daß der Zwischenraum (18) zwischen beiden Scheiben von Preßluft durchströmt wird.

6. Vorrichtung nach einem der Ansprüche 1–5, dadurch gekennzeichnet, daß die Mittellinie der Transportvorrichtung (6) U-förmig ist, wobei der Eintritt der Behälter (5) in das Gehäuse (1) am einen Arm (6a) und der Ausgang am anderen Arm (6b) der Transportvorrichtung erfolgt und die Infrarotlampen (11) zu beiden Seiten der Transportvorrichtung (6) auf dem ganzen Weg im Gehäuse (1) angeordnet sind.

7. Vorrichtung nach einem der Ansprüche 1–5, dadurch gekennzeichnet, daß die Mittellinie der Transportvorrichtung geradlinig verläuft.

8. Vorrichtung nach einem der Ansprüche 1–7, dadurch gekennzeichnet, daß die Kontrollvorrichtung Mittel zur Schritterfassung des Vorschubs der mit einer Trommel angetriebenen Transportvorrichtung (6) sowie am Ein- und Ausgang des Gehäuses (1) jeweils einen Detektor aufweist, welcher die An- bzw. Abwesenheit eines unter Druck stehenden Behälters (5) in einer Zone, die einen Erfassungsschritt des Vorschubs der Transportvorrichtung (6) lang ist, aufzeigt.

9. Vorrichtung nach Anspruch 8, dadurch gekennzeichnet, daß die Erfassungs- und Anzeigemittel aus einer Sender-Empfängeroptik bestehen.

10. Vorrichtung nach Anspruch 9, dadurch gekennzeichnet, daß jede Sender-Empfängeroptik eine Photodiode (32; 37; 37a) umfaßt, welche mit einer Glasfaseroptik (33; 38; 38a) verbunden ist, deren Ende bezüglich des zu detektierenden Teiles, welches von der Transportvorrichtung (6) vorwärts bewegt wird, fixiert ist une gegenüber dem Ende einer weiteren Glasfaseroptik (35; 40; 40a) angeordnet ist, welche mit einem Phototransistor-Empfänger (34; 39; 39a) verbunden ist.

11. Vorrichtung nach einem der Ansprüche 8–10, dadurch gekennzeichnet, daß das Erfassungsmittel bei jedem Durchgang einer Kerbe eines mit Kerben versehenen und einstückig mit der Antriebstrommel (6e) der Transportvorrichtung (6) ausgebildeten Rades an einem bestimmten Punkt einen Impuls liefert, wobei der Durchgang einer Kerbe in der Folge einem Erfassungsschritt des Vorschubs der Transportvorrichtung entspricht.

12. Vorrichtung nach Anspruch 11, dadurch gekennzeichnet, daß die Anzeigemittel am Ein- und Ausgang bei jeder Erfassung des Behälters (5) ein Spannungssignal liefern, dessen Dauer geringer ist als die Zeit zwischen zwei aufeinanderfolgenden Impulsen der Erfassungsmittel.

13. Vorrichtung nach Anspruch 12, dadurch gekennzeichnet, daß die Signale der Eintrittsanzeige zu einem Shiftregister (141) gesendet werden, worin sie sich bei jedem Impuls des Erfassungsmittels um eine Stufe verschieben, wobei der Stand an einem Punkt des Registers, der, ausgehend vom Anfang des Registers (141), der Zahl der Vorschubschritte entspricht, welche die Eingangs- und Ausgangsanzeige voneinander trennt, mit dem Stand der Austrittsanzeige verglichen wird.

**Claims**

1. A device intended for the continuous hot testing of the mechanical strength of each pressurised container of a series of pressurised containers, this device comprising a conveyor (6) allowing the containers to be tested (5) to be displaced in translation in relation to a fixed enclosure (1) which comprises internally a heating means, the containers (5) traversing the said enclosure (1) so that their internal temperature should be raised by the said heating means up to a predetermined value, characterised in that the enclosure (1) traversed by the containers to be tested (5) forms a tunnel, the heating means disposed within the said enclosure (1) being constituted by a plurality of infrared lamps (11), each one of which is protected by a casing (13) having one side (15) transparent to the radiations emitted, an automatic monitoring device controlling that each container (5) which enters the tunnel emerges therefrom after a given advance of the conveyor (6), otherwise, a safety device is triggered.

2. A device according to Claim 1, characterised in that the outlet of the tunnel is fitted with a proctective deflector (7), slanting in relation to the axis of the said outlet, the conveyor (6) following the layout of the said deflector (7) after emerging from the tunnel.

3. A device according to one of Claims 1 or 2, characterised in that the casing (13) associated with each infrared lamp 11 is a cooled metallic casing, the side (15) transparent to the infrared radiations comprising on the one hand, towards the interior of the casing (13) a quartz strip (16) and on the other hand, towards the outside of the casing (13) a glass strip (17) impervious to thermal shocks, the space (18) between the strips being swept by a cooling liquid.

4. A device according to Claim 3, characterised in that each infrared lamp casing (13) is provided with external cooling fins (24).

5. A device according to one of Claims 3 or 4, characterised in that the space (18) between the strips is swept by a flow of compressed air.

6. A device according to one of Claims 1 to 5, characterised in that the median line of the conveyor (6) is U-shaped, the entry of the containers (5) into the enclosure (1) being effected via one of the arms (6a) of the U, and the emergence via the other arm (6b), the infrared lamps (11) being disposed on either side of the conveyor (6) all along the path of the latter in the enclosure (1).

7. A device according to one of Claims 1 to 5, characterised in that the median line of the conveyor is substantially rectilinear.

8. A device according to one of Claims 1 to 7, characterised in that the monitoring device comprises a means for indexing the advance step by step of the conveyor (6) driven by a drum (6e) and at the inlet and outlet of the enclosure (1) a detection means for determining the presence or absence of a pressurised container (5) over a zone having the length of one step indexing the advance of the conveyor (6).

9. A device according to Claim 8, characterised in that the indexing and detection means are optical transmitter-receivers.

10. A device according to Claim 9, characterised in that each optical transmitter-receiver comprises one photodiode (32; 37; 37a) associated with a bundle of optical fibres (33; 38; 38a) whose end is fixed in relation to the detecting device, which the conveyor (6) displaces, and is situated opposite the end of another bundle of optical fibres (35; 40; 40a) connected to a receiving phototransistor (34; 39; 39a).

11. A device according to one of Claims 8 to 10, characterised in that the indexing means supplies a pulse when the slot of a slotted wheel intergral with the drum (6e) driving the conveyor (6) passes a fixed point, the passing of one slot to the next corresponding to one index step of the advance of the conveyor.

12. A device according to Claim 11, characterised in that the means detecting the entry and emergence supplies, each time a container (5) is identified, a rectangular voltage signal of shorter duration than the time separating two successive pulses from the indexing means.

13. A device according to Claim 12, characterised in that the rectangular signals of the entry detection are sent to a register with time delay (141) where they are displaced by one stop with each pulse from the indexing means, the level at one point of the register which corresponds starting from the input of the register (141) to the number of advancement steps separating the entry and emergence detections, being compared with the level of the outlet detection.

**FIG. 1**

## FIG. 2

FIG. 3

FIG. 4